# EUROPÄISCHE PATENTSCHRIFT

(11) **EP 2 196 372 B1**
(45) Veröffentlichungstag und Bekanntmachung des Hinweises auf die Patenterteilung: **13.12.2017**
(21) Anmeldenummer: 09012908.1
(22) Anmeldetag: 13.10.2009
(51) Int. Cl.: B60W 50/00, B60W 10/06, B60W 30/18

(54) **Verfahren zum Steuern einer Beschleunigungseinrichtung für Kraftfahrzeuge**
Method for controlling an acceleration device for motor vehicles
Procédé de commande d'un dispositif d'accélération pour véhicules automobiles

(30) Priorität: 13.12.2008 DE 102008062210
(43) Veröffentlichungstag der Anmeldung: 16.06.2010
(73) Patentinhaber: MAN Truck & Bus AG, 80995 München (DE)
(72) Erfinder: Franke, Olaf, 80807 München (DE); Kelle, Hans-Jochen, 80636 München (DE); Riegl, Stefan, 82407 Wilzhofen (DE)
(74) Vertreter: v. Bezold & Partner Patentanwälte - PartG mbB

(56) Entgegenhaltungen:
- EP-A2- 0 507 072
- EP-A2- 1 099 887
- WO-A1-01/89898
- US-A1- 2002 056 581
- US-A1- 2005 192 734

## Beschreibung

Die vorliegende Erfindung bezieht sich auf ein Verfahren zum Steuern einer Beschleunigungseinrichtung und/ oder Antriebseinrichtung für Kraftfahrzeuge. Die vorliegende Erfindung wird unter Bezugnahme auf ein Verfahren zum Steuern eines Motors beschrieben, es wird jedoch darauf hingewiesen, dass das Verfahren auch zum Steuern von Beschleunigungs-, Antriebs- oder Bremseinrichtungen, Retardern und dergleichen verwendet werden kann.

Moderne Kraftfahrzeuge und insbesondere moderne Nutzfahrzeuge weisen üblicherweise eine Vielzahl von Systemen und Einflussgrößen auf, die auf die Längsbewegung bzw. die Antriebs- und Verzögerungskraft Einfluss nehmen. Als Beispiele seien hierbei das Fahrpedal, ASR, ABS, Getriebe, Geschwindigkeitsregler ACC und dergleichen genannt. Aus dieser Vielzahl von entsprechend resultierenden Anforderungen ist es nötig, Momente und auch Drehzahlen eines Motors zu ermitteln, die in den Betriebs- und Bremsaggregaten wie beispielsweise den Dauerbremsen angesteuert werden.

Dabei hat sich im Stand der Technik durch eine Normung der SAE ein Verfahren zur Arbitrierung bzw. zur Auswahl von Drehmomenten und Drehzahlen für Motoren und Dauerbremsen etabliert. In diesem Verfahren wird durch eine prioritätsgesteuerte Auswahl aus einer Reihe von Anforderungen verschiedener Systeme mit jeweils einheitlich strukturierten Drehmomentvorgaben, Drehmomentlimitierungen, Drehzahlvorgaben und Drehzahllimitierungen getroffen. Genauer erfolgt hier eine Auswahl durch eine sequentielle Abarbeitung anstehender Anforderungen. In einem derartigen Verfahren ist eine effiziente Steuerung eines Antriebs eines Fahrzeugs möglich. Einzelne Anforderungen werden dabei jeweils anderen Anforderungen gegenübergestellt und anhand vorgegebener Prioritätsregeln wird ausgewählt, welche der Anforderungen erfüllt wird. Dieses Verfahren ist auch in der Norm SAE J1939/71 bekannt.

Die DE 10 2005 060 820 A1 beschreibt ein Verfahren zur Unterstützung eines Führens eines Fahrzeuges. Dabei wird mittels einer Längsdynamikregeleinrichtung eine Fahrgeschwindigkeit eines Fahrzeugs und mittels einer Querdynamikregeleinrichtung eine Querdynamik des Fahrzeugs geregelt, wobei eine Regelung der Querdynamik Vorrang vor einer Regelung der Fahrgeschwindigkeit hat. Weiterhin ist die Längsdynamikregeleinrichtung während der Regelung der Querdynamik aktiviert und nach der Beendigung der Regelung der Querdynamik wird die Längsdynamikregelung ausgeschaltet oder in einen das Fahrzeug mit einer Längsbeschleunigung unterhalb einer vorgegebenen Solllängsbeschleunigung beschleunigenden Betriebszustand versetzt.

Ferner ist aus EP 1 099 887 A2 eine Getriebesteuerung bekannt, die einen Notbetrieb ermöglicht. Dabei wird die Abtriebsdrehzahl des Getriebes gemessen, um daraus einen Eingangsbefehl für die Motordrehzahl abzuleiten. Diese Getriebesteuerung arbeitet jedoch ohne eine kaskadenartige Priorisierung. Aus US 2002/0056581 A1 und aus US 2005/0192734 A1 ist eine Vorrichtung bzw. ein Verfahren gemäß dem Oberbegriff der Patentansprüche 1 bzw. 12 bekannt.

Der vorliegenden Erfindung liegt die Aufgabe zugrunde, das aus der oben erwähnten Norm SAE J1939/71 definierte sequentielle Auswahlverfahren zu verbessern. Dies wird erfindungsgemäß durch ein Verfahren nach Anspruch 1 und eine Vorrichtung nach Anspruch 12 erreicht. Vorteilhafte Ausführungsformen und Weiterbildungen sind Gegenstand der Unteransprüche.

Bei dem erfindungsgemäßen Verfahren zum Steuern einer Beschleunigungseinrichtung für Kraftfahrzeuge wird eine Vielzahl von Eingangsbefehlen einer Auswahleinrichtung zugeführt und aus dieser Vielzahl von Eingangsbefehlen ein Eingangsbefehl ausgewählt und auf Basis dieses ausgewählten Eingangsbefehls eine Wertvorgabe für die Beschleunigungseinrichtung ermittelt.

Dabei wird erfindungsgemäß eine Vielzahl von Eingangsbefehlen in wenigstens zwei erste Gruppen mit vorgegebenen Anzahlen an Eingangsbefehlen eingeteilt, anschließend ein bestimmter Eingangsbefehl aus jeder ersten Gruppe ausgewählt und weiterhin die Vielzahl der aus den ersten Gruppen ausgewählten Eingangsbefehlen in eine zweite Gruppe eingeteilt und schließlich ein bestimmter Eingangsbefehl aus der wenigstens einen zweiten Gruppe ausgewählt. Die Auswahl der Eingangsbefehle erfolgt dabei bevorzugt nach vorgegebenen Auswahlregeln und insbesondere nicht zufällig.

Bei den Eingangsbefehlen kann es sich um Befehle unterschiedlicher Eingabeeinheiten, wie eines Gaspedals, eines Getriebeeingriffs, eines Fahrgeschwindigkeitsreglers oder automatischer Eingabeeinheiten, wie etwa einer Antischlupfregelung, kurz ASR, und dergleichen handeln. Bei der Auswahleinrichtung handelt es sich um beispielsweise eine Prozessoreinheit, die nach vorgegebenen Auswahlkriterien den bestimmten Eingangsbefehl auswählt. Der Eingangsbefehl wird zur Ansteuerung beispielsweise eines Motors verwendet. Unter einer Beschleunigungseinrichtung des Fahrzeugs kann es sich um jegliche Einrichtung

handeln, die in der Lage ist, eine Bewegung des Fahrzeugs und insbesondere eine Längsbewegung des Fahrzeugs zu beschleunigen bzw. zu verzögern, d.h. negativ zu beschleunigen. Insbesondere kann es sich bei der Beschleunigungseinrichtung um einen Motor des Fahrzeugs, um Bremseinrichtungen oder dergleichen handeln.

Im Gegensatz zu dem oben beschriebenen aus dem Stand der Technik bekannten Verfahren, bei dem eine sequentielle Auswahl getroffen wird, wird hier ein paralleles Verfahren mit einer Kaskade vorgeschlagen. Dies bedeutet, dass zunächst aus einer Vielzahl von Eingangsbefehlen in einem ersten Schritt Eingangssbefehle ausgewählt werden, diese wiederum einander gegenübergestellt und anschließend aus den ausgewählten Befehlen wiederum einzelne Befehle ausgewählt werden können. Damit wird nach einem K.o.-Prinzip eine gültige Auswahl getroffen. Der Vorteil dieser Vorgehensweise besteht darin, dass die Arbitrierung aus einfachen und insbesondere generischen Funktionsmodulen aufgebaut sein kann, so dass die Implementierung einfach, die Komplexität gering, die Testbarkeit einfach und eine gute Erweiterbarkeit und Skalierbarkeit möglich ist.

Vorteilhaft werden in jede erste Gruppe höchstens zwei Eingangsbefehle eingeteilt. Damit wird mit der Kaskade vorzugsweise aus immer gleichen 1 aus 2 Auswahlblöcken ausgewählt. Die jeweils ausgewählten Eingangsbefehle, werden bevorzugt ebenfalls wieder in Zweier-Gruppen in die zweiten Gruppen eingeteilt. Anschließend wird aus den zweiten Gruppen wiederum jeweils ein Befehl ausgewählt. Weitere Kaskadenstufen bzw. weitere Gruppen können sich anschließen, so dass beispielsweise aus acht Eingangsbefehlen zunächst vier anschließend zwei und schließlich ein Eingangsbefehl ausgewählt wird.

Es wäre jedoch auch möglich, dass in einer Gruppe jeweils nur ein Befehl anliegt, was dazu führt, dass dieser eine Befehl ausgewählt wird. Vorzugsweise werden die Eingangsbefehle der Auswahleinrichtung über generische Schnittstellen zugeführt. Dies bedeutet, dass jeweils für alle Eingangsbefehle gleiche Schnittstellen verwendet werden, wodurch sich das Verfahren relativ einfach gestaltet. Bei einem weiteren vorteilhaften Verfahren werden vorbestimmte Gattungen an Eingangsbefehlen über vorbestimmte Schnittstellen zugeführt. So ist es beispielsweise möglich, Befehle eines Gaspedals immer über dieselbe Schnittstelle zuzuführen.

Bei einem weiteren bevorzugten Verfahren sind die Wertvorgaben aus einer Gruppe von Sollwerten ausgewählt, welche Drehmomentsollwerte, Drehmomentmaximalwerte, Drehzahlsollwerte, Drehzahlmaximalwerte, Beschleunigungswerte für die Drehzahl und dergleichen enthält.

Weiterhin erfolgt bevorzugt die Auswahl der Eingangsbefehle mit Hilfe vorgegebener Prioritätsregeln. Dies bedeutet, dass bevorzugt jeweils ein Befehl aus zwei Befehlen nach den vorgegebenen Prioritätsregeln ausgewählt wird.

Bei einem weiteren bevorzugten Verfahren werden die Eingangsbefehle nach vorgegebenen Kriterien in die ersten Gruppen eingeteilt. So ist es beispielsweise möglich, eine Fahrpedalbetätigung mit Befehlen aus einer ASR (Antischlupfregelung) zusammenzuschalten.

Die vorliegende Erfindung ist weiterhin auf ein Verfahren zum Steuern eines Kraftfahrzeugs gerichtet, wobei ein für eine Längsbewegung des Kraftfahrzeugs charakteristischer Wert als Eingangsbefehl zugrundegelegt wird und auf Grundlage dieses charakteristischen Werts eine Beschleunigungseinrichtung des Kraftfahrzeugs nach einem Verfahren der oben beschriebenen Art gesteuert wird. Solche Eingangsbefehle können beispielsweise eine Geschwindigkeit, eine Maximalgeschwindigkeit oder eine Beschleunigung sein. Damit wird mit dem hier beschriebenen Verfahren nicht nur eine einzelne Komponente des Kraftfahrzeugs gesteuert, sonder letztlich das Kraftfahrzeug in seiner Gesamtheit.

Vorzugsweise werden mehrere Beschleunigungseinrichtungen des Kraftfahrzeugs durch ein Verfahren der oben beschriebenen Art gesteuert. So ist es möglich, nicht nur den Motor, sondern auch Bremsaggregate, Retarder und dergleichen mit den dargestellten Verfahren zu steuern.

Die vorliegende Erfindung ist weiterhin auf eine Vorrichtung zum Steuern einer Beschleunigungseinrichtung für Kraftfahrzeuge gerichtet, welche eine Auswahleinrichtung aufweist, die derart gestaltet ist, dass sie aus einer Vielzahl von der Auswahleinrichtung zugeführten Eingangsbefehlen einen Eingangsbefehl auswählt sowie eine Prozessoreinrichtung, welche aus dem ausgewählten Eingangsbefehl eine Wertvorgabe für die Beschleunigungseinrichtung ermittelt.

Erfindungsgemäß ist die Auswahleinrichtung derart gestaltet, dass sie eine Vielzahl von Eingangsbefehlen in wenigstens zwei erste Gruppen mit vorgegebenen Anzahlen von Eingangsbefehlen einteilt und genau einen Eingangsbefehl aus jeder ersten Gruppe auswählt und die Vielzahl der aus den ersten Gruppen ausgewählten Eingangsbefehle in wenigstens eine zweite Gruppe einteilt und einen Eingangsbefehl aus den in die zweite Gruppe eingeteilten Eingangsbefehlen auswählt. Damit wird auch bei der erfindungsgemäßen Vorrichtung vorgeschlagen, ein paralleles Verfahren mit einer Kaskade vorzusehen, um einzelne Eingangsbefehle auszuwählen.

Bei einem bevorzugten Verfahren weist die Vorrichtung eine Vielzahl von generischen Schnittstellen auf, über die der Auswahleinrichtung die Eingangsbefehle zugeführt werden. Vorzugsweise weist die Vorrichtung eine Vielzahl der oben beschriebenen Auswahleinrichtungen zur Steuerung des Fahrzeugs auf. Weiterhin ist bevorzugt wenigstens ein und besonders bevorzugt eine Vielzahl von Zeitgebern vorgesehen, welche die Auswahl bestimmter Eingangsbefehle stützen.

Bei einem weiteren bevorzugten Verfahren weist die Vorrichtung eine weitere Auswahleinrichtung auf, welche aus einer Vielzahl von Bewegungsbefehlen für das Kraftfahrzeug einen Bewegungsbefehl auswählt und der Auswahleinrichtung zuführt. So ist es beispielsweise möglich, dass aus Bewegungsbefehlen eines Abstandhaltesystems, einer Tempomatbedienung und dergleichen zunächst ein Bewegungsbefehl für einen Geschwindigkeitsregler übermittelt wird und anschließend dieser Bewegungsbefehl als Eingangsbefehl mit weiteren Eingangsbefehlen in einer weiteren Auswahleinrichtung zugeführt wird, welche schließlich einen bestimmten Eingangsbefehl auswählt.

Vorzugsweise ist die weitere Auswahleinrichtung derart gestaltet, dass sie durch eine Vielzahl von Bewegungsbefehlen in wenigstens zwei erste Gruppen mit vorgegebenen Anzahlen von Bewegungsbefehlen einteilt und genau einen Bewegungsbefehl aus jeder ersten Gruppe auswählt und die Vielzahl der aus den ersten Gruppen ausgewählten Bewegungsbefehle in wenigstens eine zweite Gruppe einteilt und einen Bewegungsbefehl aus der in die zweite Gruppe eingeteilten Bewegungsbefehlen auswählt. Bevorzugt ist dabei diese weitere Auswahleinrichtung der oben beschriebenen ersten Auswahleinrichtung vorgeschaltet.

Weitere Vorteile und Ausführungsformen ergeben sich aus den beigefügten Zeichnungen:

Darin zeigen:
- Fig. 1: eine schematische Darstellung einer erfindungsgemäßen Auswahleinrichtung; und
- Fig. 2: eine schematische Darstellung zur Veranschaulichung einer Fahrzeugsteuerung, wobei hier eine Vielzahl von Auswahleinrichtungen nach Fig. 1 vorgesehen ist.

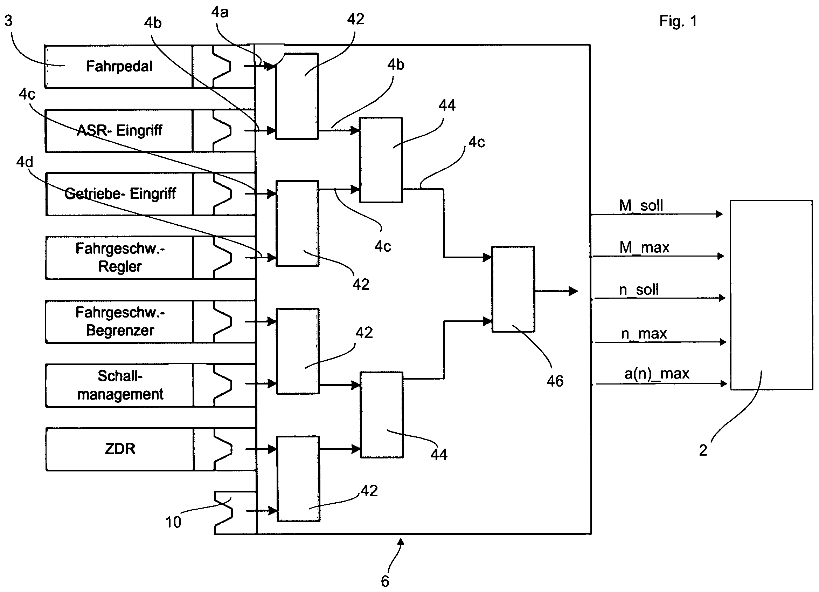

Fig. 1 zeigt eine schematische Darstellung zur Veranschaulichung einer Auswahleinrichtung 6. Diese Auswahleinrichtung 6 wählt entsprechend der Priorität aus einer Vielzahl von internen Eingabebefehlen bzw. Messages, diejenige mit der höchsten Priorität aus und bildet daraus ein Sollmoment M_Soll, eine Solldrehzahl n_Soll, ein Maximalmoment M_max, eine Maximaldrehzahl n_max, und/oder eine maximale Motordrehzahlbeschleunigung a(n)_max, die an dem Motor 2 als Vorgabe ausgegeben werden. Zusätzlich werden (nicht gezeigt) Angaben zur Drehzahlbeschleunigungsbegrenzung entsprechend der Priorität ausgewählt und ebenfalls an den Motor 2 ausgegeben. Zu diesem Zwecke werden von Eingabekomponenten 3, wie beispielsweise dem Fahrpedal über Schnittstellen 10 die entsprechenden Eingangsbefehlen 4a, 4b, 4c in die Auswahleinrichtung 6 eingegeben.

In dieser Auswahleinrichtung 6 werden jeweils zwei Eingangsbefehle 4a, 4c bzw. 4b, 4d auf Gruppen 42 aufgeteilt. In diesen Gruppen 42 wird aus jeweils zwei Eingangsbefehlen ein Eingangsbefehl 4b bzw. 4c ausgewählt. Dabei können diese Gruppen auch im Rahmen einer Software angelegt sein. Diese beiden ausgewählten Eingangsbefehle 4b, 4c werden an eine zweite Gruppe 44 übergeben, welche wiederum einen dieser beiden Eingangsbefehle, hier den Befehl 4c auswählt und an eine dritte Gruppe 46 weiterleitet.

Entsprechend werden auch im unteren Teil der Figur in jeweils erste und zweite Gruppen 42, 44 Eingangsbefehle eingegeben und letztlich durch die kaskadenartige Vorgehensweise ein Eingangsbefehl ausgewählt, der der dritten Gruppe 46 weitergeleitet wird. Diese Gruppe 46 wählt wiederum einen der beiden Eingangsbefehle aus, und dieser Befehl wird als Grundlage für die oben erwähnten Momentenvorgaben an den Motor ausgegeben. Dabei bezieht sich die Abkürzung ZDR auf eine Zwischendrehzahlregelung und die Abkürzung ASR auf eine Antischlupfregelung. In jeder der Gruppen findet dabei eine generische eins aus zwei Arbitrierung statt.

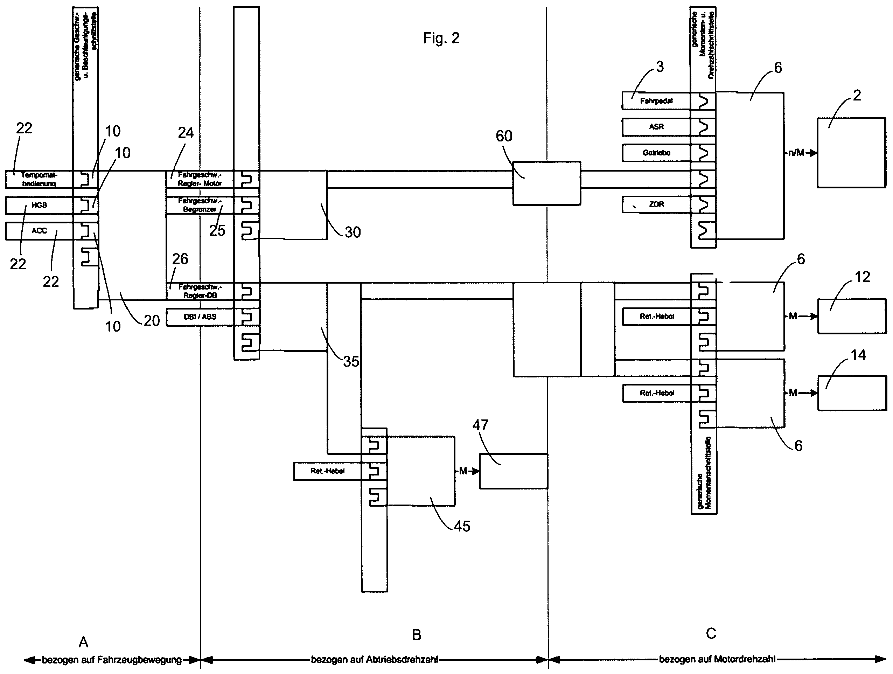

Fig. 2 zeigt eine schematische Darstellung zur Veranschaulichung einer Motoransteuerung. Dabei sind drei Funktionsbereiche bzw. Segmente A, B, C vorgegeben, wobei sich das Segment A auf die Fahrzeugbewegung bezieht, das Segment B auf die Abtriebsdrehzahl und das Segment C auf die Motordrehzahl.

In dem Segment A ist eine Auswahleinrichtung 20 vorgesehen, die aus einer Vielzahl von Bewegungsbefehlen 22, welche die Fahrgeschwindigkeit bestimmen, auswählt. Im Einzelnen werden Bewegungsbefehle wieder über generische Schnittstellen 10 der Auswahleinrichtung 20 zugeführt, wie beispielsweise Eingangsbefehle aus einer Tempomatbedienung, aus einer automatischen Abstandshaltung und dergleichen. Aus diesen Eingangsbefehlen wird wieder nach oben beschriebenen Verfahren ein bestimmter Eingangsbefehl ausgewählt und dieser beispielsweise an den Fahrgeschwindigkeitsregler für den Motor, einen Fahrgeschwindigkeitsbegrenzer oder einen Fahrgeschwindigkeitsregler-Dauerbremsen [DB] ausgegeben, wobei das Dauerbremsen durch eine Motorbremse oder einen Retarder verwirklicht sein kann. Diese jeweiligen Regler erzeugen wiederum Eingangsbefehle, die an weitere Auswahleinrichtungen 30 und 35 ausgegeben werden, die jeweils ebenfalls wiederum nach dem oben beschriebenen Verfahren bestimmte Eingangsbefehle auswählt, aus denen anschließend ein Drehmoment auf der Abtriebswelle erzeugt wird.

Das Bezugszeichen 60 bezieht sich auf ein Getriebe bzw. auf eine Getriebeübersetzung welche aus der Abtriebsdrehzahl einen Eingangsbefehl für die Motordrehzahl erzeugt. Dieser Eingangsbefehl wird mit weiteren Eingangsbefehlen, wie in Fig. 1 veranschaulicht, der Auswahleinrichtung 6 zugeführt, wobei hier, wie in Fig. 1 gezeigt, generische Momenten- und Drehzahlschnittstellen 10 vorgesehen sind. In entsprechender Weise werden über eine Auswahleinrichtung 35 Eingangsbefehle ausgewählt und diese wiederum verknüpft mit weiteren Eingangsbefehlen, beispielsweise eines Retarderhebels. Diese Eingangsbefehle werden wiederum über eine Auswahleinrichtung 45 arbitriert und an einen Sekundärretarder 47 ausgegeben.

In entsprechender Weise d.h. mit Auswahleinrichtungen 6 werden auch die Eingangsbefehle für einen Primärretarder 12 bzw. eine Motorbremse 14 ausgegeben, wobei diese Eingangsbefehle jeweils zu einer Drehmomentvorgabe führen.

Das erfindungsgemäße Verfahren wird daher nicht nur auf die Anforderungen aus verschiedenen Systemen angewendet, sondern auch für die Anforderungen aus internen Funktionen eines Managementcomputers. Weiterhin wird das Eingangs erwähnte aus dem Stand der Technik bekannte von der SAE definierte Verfahren dahingehend erweitert, dass auch, wie in Fig. 2 gezeigt, Drehzahlbeschleunigungsbegrenzungen arbitriert werden. Entsprechend ergibt sich auch eine generische Schnittstelle für Anforderungen der Drehzahlbeschleunigungsbegrenzung.

Weiterhin wird das oben erwähnte definierte Verfahren dahingehend erweitert, dass an einer vorgelagerten Stelle auch Drehmomentanforderungen an den Motor arbitriert werden, die sich auf die Abtriebswelle beziehen. Diese Arbitrierung wird hier durch die Auswahleinrichtung 30 vorgenommen.

Damit ergibt sich auch eine generische Schnittstelle für Anforderungen der sekundärseitigen Drehmomentenvorgabe.

Weiterhin besteht die Möglichkeit, dass auch Geschwindigkeitsvorgaben, Geschwindigkeitsbegrenzungen und Beschleungigungsvorgaben arbitriert werden und diese Auswahl dem oder den Geschwindigkeitsreglern vorgelagert wird. Diese Arbitrierung wird, wie in Fig. 2 gezeigt, durch die Auswahleinrichtung 20 vorgenommen. Auf diese Weise ergibt sich auch eine generische Schnittstelle für Anforderungen von Geschwindigkeiten und Beschleunigungen. Hierbei gehen keine Anforderungen verloren.

### Bezugszeichenliste

- 2: Motor
- 3: Eingabekomponente
- 6,20,30,35,45: Auswahleinrichtung
- 10: Schnittstellen
- 12: Primärretarder
- 14: Motorbremse
- 4a,4b,4c,4d: Eingangsbefehle
- 42,44,46: Gruppen
- A,B,C: Funktionsbereiche
- 47: Sekundärretarder
- 60: Getriebe
- M_Soll: Solldrehmoment
- N_Soll: Solldrehzahl
- M_max: maximales Drehmoment
- N_max: Maximaldrehzahl
- a(n)_max: Motordrehzahlbeschleunigung

## Patentansprüche

1. Verfahren zum Steuern einer Beschleunigungseinrichtung (2) für Kraftfahrzeuge, wobei eine Vielzahl von Eingangsbefehlen (4a, 4b, 4c, 4d) einer Auswahleinrichtung (6) zugeführt wird und aus dieser Vielzahl von Eingangsbefehlen (4a, 4b, 4c, 4d) ein Eingangsbefehl ausgewählt wird und auf Basis dieses ausgewählten Eingangsbefehls eine Wertvorgabe für die Beschleunigungseinrichtung (2) ermittelt wird, mit den folgenden Schritten:
a) Einteilung der Vielzahl von Eingangsbefehlen (4a, 4b, 4c, 4d) in wenigstens zwei erste Gruppen (42) mit vorgegebenen Anzahlen an Eingangsbefehlen (4a, 4b, 4c, 4d)
b) Auswahl eines bestimmten Eingangsbefehls (4a, 4b, 4c, 4d) aus jeder ersten Gruppe (42);
c) Einteilung der Vielzahl der aus den ersten Gruppen ausgewählten Eingangsbefehle (4a, 4b, 4c, 4d) in wenigstens eine zweite Gruppe (44);
d) Auswahl eines bestimmten Eingangsbefehls (4a, 4b, 4c, 4d) aus der wenigstens einen zweiten Gruppe (44),
**dadurch gekennzeichnet**,
e) dass ein Eingangsbefehl der Vielzahl von Eingangsbefehlen (4a, 4b, 4c, 4d) von einem Getriebe (60) erzeugt wird und ein Eingangsbefehl für die Motordrehzahl ist, und
f) dass das Getriebe (60) den Eingangsbefehl für die Motordrehzahl aus der Abtriebsdrehzahl erzeugt.

2. Verfahren nach Anspruch 1,
**dadurch gekennzeichnet, dass**
in jede erste Gruppe (42) höchstens zwei Eingangsbefehle (4a, 4b, 4c, 4d) eingeteilt werden.

3. Verfahren nach wenigstens einem der vorangegangenen Ansprüche,
**dadurch gekennzeichnet, dass**
in jede zweite Gruppe (44) höchstens zwei Eingangsbefehle (4a, 4b, 4c, 4d) eingeteilt werden.

4. Verfahren nach wenigstens einem der vorangegangenen Ansprüche,
**dadurch gekennzeichnet, dass**
die Eingangsbefehle (4a, 4b, 4c, 4d) der Auswahleinrichtung (6) über generische Schnittstellen (10) zugeführt werden.

5. Verfahren nach Anspruch 4,
**dadurch gekennzeichnet, dass**
vorbestimmte Gattungen an Eingangsbefehlen (4a, 4b, 4c, 4d) über vorbestimmte Schnittstellen (10) zugeführt werden.

6. Verfahren nach wenigstens einem der vorangegangenen Ansprüche,
**dadurch gekennzeichnet, dass**
die Wertvorgaben aus einer Gruppe von Sollwerten ausgewählt sind, welche DrehmomentSollwerte, Drehmoment -Maximalwerte; Drehzahl-Sollwerte, Drehzahl -Maximalwerte, Beschleunigungswerte für die Drehzahl und dergleichen enthält.

7. Verfahren nach wenigstens einem der vorangegangenen Ansprüche,
**dadurch gekennzeichnet, dass**
die Auswahl der Eingangsbefehle (4a, 4b, 4c, 4d) mit Hilfe vorgegebener Prioritätsregeln erfolgt.

8. Verfahren nach wenigstens einem der vorangegangenen Ansprüche,
**dadurch gekennzeichnet, dass**
nicht ausgewählte Eingangsbefehle (4a, 4b, 4c, 4d) verworfen werden.

9. Verfahren nach wenigstens einem der vorangegangenen Ansprüche,
**dadurch gekennzeichnet, dass**
die Eingangsbefehle (4a, 4b, 4c, 4d) nach vorgegebenen Kriterien in die ersten Gruppen (42) eingeteilt werden.

10. Verfahren zum Steuern eines Kraftfahrzeugs, wobei ein für eine Längsbewegung des Kraftfahrzeugs charakteristischer Wert als Eingangsbefehl (4a, 4b, 4c, 4d) zugrundegelegt wird und auf Grundlage dieses charakteristischen Werts eine Beschleunigungseinrichtung des Kraftfahrzeugs nach einem Verfahren nach wenigstens einem der vorangegangenen Ansprüche 1-9 gesteuert wird.

11. Verfahren nach Anspruch 10,
**dadurch gekennzeichnet, dass**
mehrere Beschleunigungseinrichtungen des Kraftfahrzeugs mit Hilfe des Verfahrens nach wenigstens einem der vorangegangenen Ansprüche 1-9 gesteuert werden.

12. Vorrichtung zum Steuern einer Beschleunigungseinrichtung (2) für Kraftfahrzeuge mit
a) einer Auswahleinrichtung (6), welche derart gestaltet ist,
a1) dass sie aus einer Vielzahl von der Auswahleinrichtung (6) zugeführten Eingangsbefehlen (4a, 4b, 4c, 4d) einen Eingangsbefehl (4a, 4b, 4c, 4d) auswählt, und
a2) dass sie eine Vielzahl von Eingangsbefehlen (4a, 4b, 4c, 4d) in wenigstens zwei erste Gruppen (42) mit vorgegebenen Anzahlen von Eingangsbefehlen (4a, 4b, 4c, 4d) einteilt und genau einen Eingangsbefehl (4a, 4b, 4c, 4d) aus jeder ersten Gruppe (42) auswählt und die Vielzahl der aus den ersten Gruppen ausgewählten Eingangsbefehle (4a, 4b, 4c, 4d) in wenigstens eine zweite Gruppe (44) einteilt und einen Eingangsbefehl (4a, 4b, 4c, 4d) aus der in die zweite Gruppe (44) eingeteilten Eingangsbefehlen (4a, 4b, 4c, 4d) auswählt, sowie mit
b) einer Prozessoreinrichtung, welche aus dem ausgewählten Eingangsbefehl (4a, 4b, 4c, 4d) eine Wertvorgabe für die Beschleunigungseinrichtung (2) ermittelt,
**dadurch gekennzeichnet**,
c) dass ein Eingangsbefehl der Vielzahl von Eingangsbefehlen (4a, 4b, 4c, 4d) von einem Getriebe (60) erzeugt wird und ein Eingangsbefehl für die Motordrehzahl ist, und
d) dass das Getriebe (60) den Eingangsbefehl für die Motordrehzahl aus der Abtriebsdrehzahl erzeugt.

13. Vorrichtung nach Anspruch 12,
**dadurch gekennzeichnet, dass**
die Vorrichtung eine Vielzahl von generischen Schnittstellen (10) aufweist, über die der Auswahleinrichtung (6) die Eingangsbefehle (4a, 4b, 4c, 4d) zugeführt werden.

14. Vorrichtung nach Anspruch 12,
**dadurch gekennzeichnet, dass**
die Vorrichtung eine weitere Auswahleinrichtung (20) aufweist, welche aus einer Vielzahl von Bewegungsbefehlen für das Kraftfahrzeug einen Bewegungsbefehl auswählt und der Auswahleinrichtung (6) zuführt.

15. Vorrichtung nach Anspruch 14,
**dadurch gekennzeichnet, dass**
die weitere Auswahleinrichtung (22) derart gestaltet ist, dass sie eine Vielzahl von Bewegungsbefehlen (22) in wenigstens zwei erste Gruppen (32) mit vorgegebenen Anzahlen von Bewegungsbefehlen einteilt und genau einen Bewegungsbefehl aus jeder ersten Gruppe (32) auswählt und die Vielzahl der aus den ersten Gruppen ausgewählten Bewegungsbefehle in wenigstens eine zweite Gruppe (34) einteilt und einen Bewegungsbefehl aus den in die zweite Gruppe (34) eingeteilten Bewegungsbefehlen auswählt.

## Claims

1. A method for controlling an acceleration device (2) for motor vehicles, wherein a multiplicity of input commands (4a, 4b, 4c, 4d) are fed to a selection device (6), and one input command is selected from this multiplicity of input commands (4a, 4b, 4c, 4d) and a value prescription for the acceleration device (2) is determined on the basis of this selected input command, comprising the following steps:
a) dividing the multiplicity of input commands (4a, 4b, 4c, 4d) into at least two first groups (42) with predefined numbers of input commands (4a, 4b, 4c, 4d)
b) selecting a specific input command (4a, 4b, 4c, 4d) from each first group (42);
c) dividing the multiplicity of the input commands (4a, 4b, 4c, 4d) selected from the first groups into at least one second group (44);
d) selecting a specific input command (4a, 4b, 4c, 4d) from the at least one second group (44),
characterized
e) in that an input command of the multiplicity of input commands (4a, 4b, 4c, 4d) is generated by a transmission (60) and is an input command for the engine rotational speed, and
f) in that the transmission (60) generates the input command for the engine rotational speed from the output rotational speed.

2. The method according to Claim 1,
**characterized in that**
at most two input commands (4a, 4b, 4c, 4d) are placed in each first group (42).

3. The method according to at least one of the preceding claims,
**characterized in that**
at most two input commands (4a, 4b, 4c, 4d) are placed in each second group (44).

4. The method according to at least one of the preceding claims,
**characterized in that**
the input commands (4a, 4b, 4c, 4d) of the selection device (6) are fed via generic interfaces (10).

5. The method according to Claim 4,
**characterized in that**
predetermined types of input commands (4a, 4b, 4c, 4d) are fed via predetermined interfaces (10).

6. The method according to at least one of the preceding claims,
**characterized in that**
the value prescriptions are selected from a group of target values which contains torque target values, torque maximum values, rotational speed target values, rotational speed maximum values, acceleration values for the rotational speed and the like.

7. The method according to at least one of the preceding claims,
**characterized in that**
the selection of the input commands (4a, 4b, 4c, 4d) is carried out using predefined priority rules.

8. The method according to at least one of the preceding claims,
**characterized in that**
non-selected input commands (4a, 4b, 4c, 4d) are rejected.

9. The method according to at least one of the preceding claims,
**characterized in that**
the input commands (4a, 4b, 4c, 4d) are placed in the first groups (42) according to predefined criteria.

10. A method for controlling a motor vehicle, wherein a value which is characteristic of a longitudinal movement of the motor vehicle is used as a basis for an input command (4a, 4b, 4c, 4d), and on the basis of this characteristic value an acceleration device of the motor vehicle is controlled according to a method according to at least one of the preceding Claims 1-9.

11. The method according to Claim 10,
**characterized in that**
a plurality of acceleration devices of the motor vehicle are controlled using the method according to at least one of the preceding Claims 1-9.

12. An apparatus for controlling an acceleration device (2) for motor vehicles comprising
a) a selection device (6) which is configured in such a way
a1) that it selects an input command (4a, 4b, 4c, 4d) from a multiplicity of input commands (4a, 4b, 4c, 4d) fed to the selection device (6), and
a2) that it divides a multiplicity of input commands (4a, 4b, 4c, 4d) into at least two first groups (42) with predefined numbers of input commands (4a, 4b, 4c, 4d) and selects precisely one input command (4a, 4b, 4c, 4d) from each first group (42) and divides the multiplicity of the input commands (4a, 4b, 4c, 4d) selected from the first groups into at least one second group (44) and selects an input command (4a, 4b, 4c, 4d) from the input commands (4a, 4b, 4c, 4d) placed in the second group (44),
and comprising
b) a processor device which determines a value prescription for the acceleration device (2) from the selected input command (4a, 4b, 4c, 4d), **characterized**
c) **in that** an input command of the multiplicity of input commands (4a, 4b, 4c, 4d) is generated by a transmission (60) and is an input command for the engine rotational speed,
and
d) **in that** the transmission (60) generates the input command for the engine rotational speed from the output rotational speed.

13. The apparatus according to Claim 12,
**characterized in that**
the apparatus has a multiplicity of generic interfaces (10) via which the input commands (4a, 4b, 4c, 4d) are fed to the selection device (6).

14. The apparatus according to Claim 12,
**characterized in that**
the apparatus has a further selection device (20) which selects a movement command from a multiplicity of movement commands for the motor vehicle and feeds it to the selection device (6).

15. The apparatus according to Claim 14,
**characterized in that**
the further selection device (22) is configured in such a way that it divides a multiplicity of movement commands (22) into at least two first groups (32) with predefined numbers of movement commands and selects precisely one movement command from each first group (32) and places the multiplicity of the movement commands selected from the first groups into at least one second group (34) and selects a movement command from the movement commands placed in the second group (34) .

## Revendications

1. Procédé de commande d'un dispositif d'accélération (2) pour véhicules automobiles, une pluralité d'instructions d'entrée (4a, 4b, 4c, 4d) étant acheminées à un dispositif de sélection (6) et une instruction d'entrée étant sélectionnée parmi cette pluralité d'instructions d'entrée (4a, 4b, 4c, 4d) et une indication de valeur pour le dispositif d'accélération (2) étant déterminée en se basant sur cette instruction d'entrée sélectionnée, comprenant les étapes suivantes :
a) répartition de la pluralité d'instructions d'entrée (4a, 4b, 4c, 4d) en au moins deux premiers groupes (42) ayant des nombres prédéfinis d'instructions d'entrée (4a, 4b, 4c, 4d),
b) sélection d'une instruction d'entrée (4a, 4b, 4c, 4d) donnée de chaque premier groupe (42) ;
c) répartition de la pluralité d'instructions d'entrée (4a, 4b, 4c, 4d) sélectionnées dans les premiers groupes en au moins un deuxième groupe (44) ;
d) sélection d'une instruction d'entrée (4a, 4b, 4c, 4d) donnée de l'au moins un deuxième groupe (44), **caractérisé en ce**
e) **qu'**une instruction d'entrée de la pluralité d'instructions d'entrée (4a, 4b, 4c, 4d) est générée par une boîte de vitesses (60) et elle est une instruction d'entrée pour la vitesse de rotation du moteur, et
f) **que** la boîte de vitesses (60) génère l'instruction d'entrée pour la vitesse de rotation du moteur à partir de la vitesse de rotation de sortie.

2. Procédé selon la revendication 1, **caractérisé en ce qu'**un maximum de deux instructions d'entrée (4a, 4b, 4c, 4d) sont réparties dans chaque premier groupe (42) .

3. Procédé selon au moins l'une des revendications précédentes, **caractérisé en ce qu'**un maximum de deux instructions d'entrée (4a, 4b, 4c, 4d) sont réparties dans chaque deuxième groupe (44).

4. Procédé selon au moins l'une des revendications précédentes, **caractérisé en ce que** les instructions d'entrée (4a, 4b, 4c, 4d) sont acheminées au dispositif de sélection (6) par le biais d'interfaces génériques (10) .

5. Procédé selon la revendication 4, **caractérisé en ce que** des genres prédéfinis d'instructions d'entrée (4a, 4b, 4c, 4d) sont acheminées par le biais d'interfaces (10) prédéfinies.

6. Procédé selon au moins l'une des revendications précédentes, **caractérisé en ce que** les indications de valeur sont sélectionnées dans un groupe de valeurs de consigne qui contient des valeurs de consigne de couple, des valeurs maximales de couple, des valeurs de consigne de vitesse de rotation, des valeurs maximales de vitesse de rotation, des valeurs d'accélération pour la vitesse de rotation et similaire.

7. Procédé selon au moins l'une des revendications précédentes, **caractérisé en ce que** la sélection des instructions d'entrée (4a, 4b, 4c, 4d) est effectuée à l'aide de règles de priorité prédéfinies.

8. Procédé selon au moins l'une des revendications précédentes, **caractérisé en ce que** les instructions d'entrée (4a, 4b, 4c, 4d) non sélectionnées sont rejetées.

9. Procédé selon au moins l'une des revendications précédentes, **caractérisé en ce que** les instructions d'entrée (4a, 4b, 4c, 4d) sont réparties dans les premiers groupes (42) selon des critères prédéfinis.

10. Procédé pour commander un véhicule automobile, une valeur caractéristique pour un mouvement longitudinal du véhicule automobile est retenue comme instruction d'entrée (4a, 4b, 4c, 4d) et un dispositif d'accélération du véhicule automobile est commandé en se basant sur cette valeur caractéristique conformément à un procédé selon au moins l'une des revendications précédentes 1 à 9.

11. Procédé selon la revendication 10, **caractérisé en ce que** plusieurs dispositifs d'accélération du véhicule automobile sont commandés à l'aide du procédé selon au moins l'une des revendications précédentes 1 à 9.

12. Système de commande d'un dispositif d'accélération (2) pour véhicules automobiles, comprenant
a) un dispositif de sélection (6) qui est configuré de telle sorte
a1) qu'il sélectionne une instruction d'entrée (4a, 4b, 4c, 4d) parmi une pluralité d'instructions d'entrée (4a, 4b, 4c, 4d) acheminées au dispositif de sélection (6), et
a2) qu'il répartit une pluralité d'instructions d'entrée (4a, 4b, 4c, 4d) en au moins deux premiers groupes (42) ayant des nombres prédéfinis d'instructions d'entrée (4a, 4b, 4c, 4d) et sélectionne exactement une instruction d'entrée (4a, 4b, 4c, 4d) de chaque premier groupe (42) et répartit la pluralité d'instructions d'entrée (4a, 4b, 4c, 4d) sélectionnées dans les premiers groupes en au moins un deuxième groupe (44) et sélectionne une instruction d'entrée (4a, 4b, 4c, 4d) parmi les instructions d'entrée (4a, 4b, 4c, 4d) réparties dans le deuxième groupe (44), et comprenant aussi
b) un dispositif à processeur qui détermine une indication de valeur pour le dispositif d'accélération (2) à partir de l'instruction d'entrée (4a, 4b, 4c, 4d) sélectionnée,
caractérisé en ce
c) qu'une instruction d'entrée de la pluralité d'instructions d'entrée (4a, 4b, 4c, 4d) est générée par une boîte de vitesses (60) et elle est une instruction d'entrée pour la vitesse de rotation du moteur, et
d) que la boîte de vitesses (60) génère l'instruction d'entrée pour la vitesse de rotation du moteur à partir de la vitesse de rotation de sortie.

13. Système selon la revendication 12, **caractérisé en ce que** le système possède une pluralité d'interfaces génériques (10) par le biais desquelles les instructions d'entrée (4a, 4b, 4c, 4d) sont acheminées au dispositif de sélection (6).

14. Système selon la revendication 12, **caractérisé en ce que** le système possède un dispositif de sélection supplémentaire (20) qui, parmi une pluralité d'instructions de mouvement pour le véhicule, sélectionne une instruction de mouvement et l'achemine au dispositif de sélection (6).

15. Système selon la revendication 14, **caractérisé en ce que** le dispositif de sélection supplémentaire (22) est configuré de telle sorte qu'il répartit une pluralité d'instructions de mouvement (22) dans au moins deux premiers groupes (32) ayant des nombres prédéfinis d'instructions de mouvement et sélectionne exactement une instruction de mouvement de chaque premier groupe (32) et répartit la pluralité d'instructions de mouvement sélectionnées des premiers groupes en au moins un deuxième groupe (34) et sélectionne une instruction de mouvement parmi les instructions de mouvement réparties dans le deuxième groupe (34).
